# EUROPÄISCHE PATENTANMELDUNG

(11) **EP 2 003 153 A1**
(43) Veröffentlichungstag der Anmeldung: **17.12.2008**
(21) Anmeldenummer: 07110298.2
(22) Anmeldetag: 14.06.2007
(51) Int. Cl.: C08F 290/04, C08F 290/06, C09J 151/00

(54) **Elastische (Meth)acrylatzusammensetzung**

(71) Anmelder: Sika Technology AG, 6340 Baar (CH)
(72) Erfinder: Egli, Patricia, 8353, Elgg (CH); Cirillo, Fabio, 4153, Reinach (CH)
(74) Vertreter: Sika Patent Attorneys

(57) **Zusammenfassung**

Die vorliegende Erfindung betrifft elastische (Meth)acrylatzusammensetzungen umfassend mindestens ein Monomer **A**, ein Co-Monomer **B** und ein Elastomer **C**.

Derartige Zusammensetzungen eignen sich zum Verkleben, Abdichten sowie zur Herstellung von Beschichtungen. Insbesondere eignen sich erfindungsgemässe Zusammensetzungen zum Verkleben von Substraten mit unterschiedlichen linearen Wärmeausdehnungskoeffizienten, bei denen im Fall von Temperaturschwankungen eine Art Bimetall-Effekt zu beobachten ist. Bevorzugt eignen sich die Zusammensetzungen zum Verkleben von Glas mit Polyvinylchlorid (PVC) und/oder Aluminium.

## Beschreibung

### Technisches Gebiet

Die Erfindung betrifft das Gebiet der elastischen (Meth)acrylatklebstoffe, -dichtstoffe und -beschichtungen.

### Stand der Technik

Um die Flexibilität und die Schlagzähigkeit von ansonsten spröden und sehr niedrige Bruchdehnungen aufweisenden (Meth)acrylatzusammensetzungen zu steigern und somit ihre Anwendbarkeit auf weitere Gebiete auszudehnen, wurden unterschiedliche Vorgehensweisen eingeschlagen.

So beschreibt beispielsweise US 3,994,764 die Zugabe von bei Raumtemperatur festen, nicht reaktiven Elastomeren zu der (Meth)acrylatzusammensetzung. Der Nachteil solcher Zusammensetzungen ist, dass die (Meth)-acrylatmonomere so gewählt sein müssen, dass sich das feste Elastomer darin löst. Diesem Anspruch wird in geeignetem Ausmass nur Methylmethacrylat gerecht, welches wiederum den Nachteil aufweist, dass es bei der Anwendung einen sehr unangenehmen Geruch verbreitet und hochentzündlich ist.

Die Zugabe von bei Raumtemperatur flüssigen, reaktiven Elastomeren zu der (Meth)acrylatzusammensetzung zur Verbesserung der Flexibilität ist beispielsweise beschrieben in US 4,769,419. Weiterhin ist beispielsweise in US 4,439,600 die Zugabe von Polyurethanpolymeren, welche mit (Meth)-acrylaten funktionalisiert sind, beschrieben. Derartige Zusammensetzungen haben den Nachteil, dass sie nach der Aushärtung ein visko-elastisches Verhalten aufweisen und sich unter Belastung plastisch deformieren.

WO 02/070619 beschreibt elastische (Meth)acrylatzusammensetzungen umfassend ein monofunktionelles (Meth)acrylatmonomer, mit einer hohen Glasübergangstemperatur (Tg), ein monofunktionelles (Meth)acrylat-Co-Monomer und ein flüssiges Elastomer. Unerwartet wurde jedoch gefunden, dass derartige Zusammensetzungen, aufgrund des starken weichmachenden Effekts eines Grossteils der darin enthaltenen Co-Monomere, auf gewissen Substraten ungenügende Hafteigenschaften aufweisen und sich deshalb insbesondere für die Verklebung von Glas mit Polyvinylchlorid (PVC) und/oder Aluminium als ungeeignet erwiesen.

### Darstellung der Erfindung

Aufgabe der vorliegenden Erfindung ist es daher, Zusammensetzungen zur Verfügung zu stellen, welche sich bei optimalen elastischen Eigenschaften für strukturelle und semi-strukturelle Anwendungen, insbesondere für die Verklebung von Glas mit PVC und/oder Aluminium, eignen.

Überaschenderweise wurde nun gefunden, dass Zusammensetzungen gemäss Anspruch 1 diese Aufgabe lösen.

Diese Zusammensetzungen verfügen über eine sehr hohe Elastizität, welche ihnen erlaubt, Deformationen aufzunehmen, wie sie beispielsweise durch den so genannten Bimetall-Effekt bei der Anwendung auf Substraten mit unterschiedlichen linearen Wärmeausdehnungskoeffizienten auftreten. Derartige Verformungen treten beispielsweise auch bei der Verklebung von Glas mit Metallen oder Kunststoffen auf. Ebenso, und für den Fachmann nicht nahe liegend, weisen erfindungsgemässe Zusammensetzungen eine optimale Haftung auf einer grossen Anzahl von Substraten, insbesondere aber auf Glas, PVC und Aluminium, auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Zusammensetzung umfassend mindestens ein Monomer **A**, welches ausgewählt ist aus der Gruppe bestehend aus Methylmethacrylat (MMA), Tetrahydrofurfurylmethacrylat (THFMA), Cyclohexylmethacrylat (CHMA), Isobornylmethacrylat (IBMA) und Trimethylcyclohexylmethacrylat (TMCHMA), insbesondere Methylmethacrylat (MMA) oder Tetrahydrofurfurylmethacrylat (THFMA);
> 0 bis 10 Gew.-%, insbesondere 1 bis 8 Gew.-%, eines Co-Monomers **B**, welches Ethylhexylacrylat (EHA) oder Maleinsäurediallylester (MADAE) ist; sowie
mindestens ein Elastomer C der Formel (1). 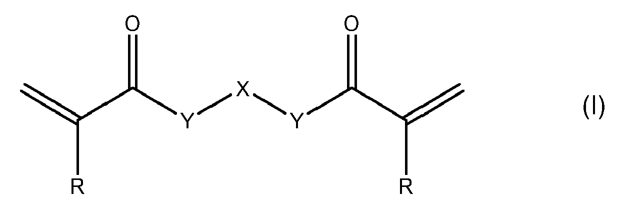 Dabei steht R entweder für ein Wasserstoffatom oder für eine Methylgruppe. X steht für ein polymeres Polyol nach Entfernung von zwei OH-Gruppen und Y steht für O oder für NR", wobei R" für einen Kohlenwasserstoffrest oder für ein Wasserstoffatom, bevorzugt für ein Wasserstoffatom, steht.

Insbesondere ist das Elastomer **C** der Formel (I) bei Raumtemperatur flüssig, was zähflüssige und hochviskose Elastomere einschliesst.

Der Anteil der Verbindungen **A**, **B** und **C** an der gesamten Zusammensetzung beträgt zusammen ≥ 50 Gew.-% und das Gewichtsverhältnis **A**:(**B**+**C**) in der Zusammensetzung liegt zwischen
■ 0.5:1 und 1.2:1, wenn **A** MMA ist;
■ 0.6:1 und 3.2:1, wenn **A** THFMA ist;
■ 0.5:1 und 2:1, wenn **A** CHMA ist;
■ 0.5:1 und 1.5:1, wenn **A** IBMA ist;
■ 0.5:1 und 2:1, wenn **A** TMCHMA ist.
   Insbesondere liegt das Gewichtsverhältnis **A**:(**B**+**C**) in der Zusammensetzung zwischen
■ 0.6:1 und 1.1:1, bevorzugt zwischen 0.8:1 und 1:1, wenn **A** MMA ist;
■ 1:1 und 2.6:1, bevorzugt zwischen 1.5:1 und 2:1, wenn **A** THFMA ist;
■ 0.5:1 und 1.7:1, bevorzugt zwischen 0.5:1 und 1.5:1, wenn **A** CHMA ist;
■ 0.5:1 und 1.3:1, bevorzugt zwischen 0.5:1 und 1:1, wenn **A** IBMA ist;
■ 0.5:1 und 1.5:1, bevorzugt zwischen 0.5:1 und 1:1, wenn **A** TMCHMA ist.

Liegt das Gewichtsverhältnis **A**:(**B**+**C**) ausserhalb des angegebenen Bereichs, verschlechtern sich die Eigenschaften der Zusammensetzung. Bei einem das Gewichtsverhältnis von **A**:(**B**+**C**), welches unterhalb des angegebenen Bereichs liegt, das heisst, dass mehr (**B**+**C**) im Verhältnis zu **A** eingesetzt wird, weist die Zusammensetzung mangelnde Haftung auf. Weiterhin verschlechtern sich auch die mechanischen Eigenschaften, was in manchen Fällen so weit reicht, dass die Zusammensetzung nicht richtig aushärtet.

Liegt das Gewichtsverhältnis **A**:(**B**+**C**) oberhalb des angegebenen Bereichs, das heisst, dass mehr **A** im Verhältnis zu (**B**+**C**) eingesetzt wird, weist die Zusammensetzung zwar gute Haftungseigenschaften, jedoch nur eine sehr geringe Flexibilität auf. Dadurch ist sie für die Verklebung von Materialien mit unterschiedlichen linearen Wärmeausdehnungskoeffizienten, insbesondere für die Verklebung von Glas mit PVC und/oder Aluminium, ungeeignet.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "polymeres Polyol" umfasst im vorliegenden Dokument ein beliebiges Polymer gemäss vorhergehender Definition, welches mehr als eine Hydroxylgruppe aufweist. Dem entsprechend umfasst der Begriff "polymeres Diol" ein beliebiges Polymer, welches genau zwei Hydroxylgruppen aufweist.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Das Elastomer **C** der Formel (1) weist vorzugsweise ein mittleres Molekulargewicht von 1'000 bis 40'000 g/mol, insbesondere von 1'000 bis 30'000 g/mol, bevorzugt von 1'000 bis 20'000 g/mol, auf.

Im Elastomer **C** der Formel (I) steht der Rest X für ein polymeres Polyol nach Entfernung von zwei OH-Gruppen, wobei dieses polymere Polyol insbesondere ein Polyalkylenpolyol, ein Polyoxyalkylenpolyol oder ein Polyurethanpolyol; ein polyhydroxyfunktionelles Ethylen-Propylen-, Ethylen-Butylen- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol ist.

Polyhydroxyterminierte Acrylnitril/Butadien-Copolymere werden typischerweise aus carboxylterminierten Acrylnitril/Butadien-Copolymeren, welche beispielsweise unter dem Namen Hycar® CTBN von Noveon Inc., USA, kommerziell erhältlich sind, und Epoxiden oder Aminoalkoholen hergestellt.

Geeignete Elastomere **C** der Formel (I) sind beispielsweise kommerziell erhältlich von der Firma Kraton Polymers, USA, oder unter den Handelsnamen Hycar® VTB und Hycar® VTBNX von der Firma Noveon Inc., USA.

Insbesondere ist das polymere Polyol ein polymeres Diol **PD**.

Beim Elastomer **C** der Formel (I) handelt es sich bevorzugt um ein Polyurethan(meth)acrylat. Derartige Verbindungen sind typischerweise herstellbar aus der Reaktion von mindestens einem Diol **D** mit mindestens einem Diisocyanat und einer (Meth)acrylsäure, einem (Meth)acrylamid oder einem (Meth)acrylsäureester, welcher eine Hydroxylgruppe aufweist.

In einem ersten Verfahren kann diese Umsetzung dadurch erfolgen, dass das Diol **D** und das Diisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei darauf zu achten ist, dass die NCO-Gruppen gegenüber den OH-Gruppen im stöchiometrischen Überschuss vorliegen. Das aus dieser Umsetzung resultierende Isocyanatgruppen terminierte Polyurethanpolymer wird dann mit einer (Meth)-acrylsäure, einem (Meth)acrylamid oder mit einem (Meth)acrylsäureester, welcher eine Hydroxylgruppe aufweist, insbesondere mit einem Hydroxyalkyl-(meth)acrylat wie Hydroxypropylacrylat (HPA), Hydroxypropylmethacrylat (HPMA), Hydroxybutylacrylat (HBA) oder Hydroxybutylmethacrylat (HBMA) bevorzugt mit Hydroxyethylacrylat (HEA) oder Hydroxyethylmethacrylat (HEMA), oder mit einem Monohydroxypoly(meth)acrylat eines Polyols, bevorzugt von Glycerin oder Trimethylolpropan, zu einem Polyurethan(meth)-acrylat, umgesetzt.

In einem zweiten Verfahren kann das Diol **D** mit dem Diisocyanat umgesetzt werden, wobei die OH-Gruppen gegenüber den NCO-Gruppen im stöchiometrischen Überschuss vorliegen. Das aus dieser Umsetzung resultierende Hydroxylgruppen terminierte Polyurethanpolymer kann mit einer (Meth)acrylsäure zum Elastomer **C** der Formel (I) verestert werden.

Ein weiteres Verfahren zur Herstellung des Elastomers **C** ist, in einem ersten Schritt die (Meth)acrylsäure, das (Meth)acrylamid oder den (Meth)-acrylsäureester, welcher eine Hydroxylgruppe aufweist, insbesondere Hydroxyalkyl(meth)acrylat wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan, mit mindestens einem Diisocyanat umzusetzen, welches in einer Menge eingesetzt wird, dass die NCO-Gruppen gegenüber den OH-Gruppen im Überschuss vorliegen. In einer folgenden Reaktion wird das resultierende, eine Isocyanatgruppe aufweisende Zwischenprodukt mit mindestens einem Diol **D** zum Elastomer **C** der Formel (I) umgesetzt.

Ebenfalls möglich ist die Herstellung des Elastomers **C** der Formel (I) durch eine Veresterung einer (Meth)acrylsäure mit einem Diol **D,** wobei das Diol in stöchiometrischem Überschuss vorliegt. In einer anschliessenden Reaktion reagiert das teilveresterte Diol **D** mit einem Diisocyanat zum Elastomer **C** der Formel (I).

Bevorzugte Diole **D** sind Polyoxyalkylendiole, auch "Polyetherdiole" genannt, Polyesterdiole, Polycarbonatdiole und deren Mischungen. Die meist bevorzugten Diole sind Polyoxyethylendiole, Polyoxypropylendiole oder Polyoxybutylendiole.

Die Polyoxyalkylendiole können unterschiedliche Ungesättigtheitsgrade (gemessen nach ASTM D-2849-69 und angegeben in Milliequivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.

Die Verwendung von Polyoxyalkylendiolen mit tiefem Ungesättigtheitsgrad, insbesondere von weniger als 0.01 mEq/g, wird für Diole mit einem Molekulargewicht von ≥ 2000 g/mol bevorzugt.

Als Diisocyanate eignen sich grundsätzlich alle Diisocyanate. Beispielsweise sind erwähnt 1,6-Hexamethylendiisocyanat (HDI), 2-Methylpenta-methylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-düsocyanat, 1-lsocyana-to-3,3,5-trimethyl-5-isocyanatomethyl-cyclohexan (= lsophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendüsocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Bevorzugtes Diisocyanat ist 1-Isocyanato-3,3,5-trimethyl-5-isocyanatomethyl-cyclohexan (IPDI).

Meist bevorzugt enthält die beschriebene Zusammensetzung als Monomer **A** Tetrahydrofurfurylmethacrylat (THFMA), als Co-Monomer **B** Ethylhexylacrylat (EHA) oder Maleinsäurediallylester (MADAE) und als Elastomer **C** ein Polyurethan(meth)acrylat.

Die Zusammensetzung kann weiterhin zusätzlich mindestens einen Haftverbesserer, insbesondere ein Metall(meth)acrylat oder ein (Meth)acrylat der Formel (II), enthalten.

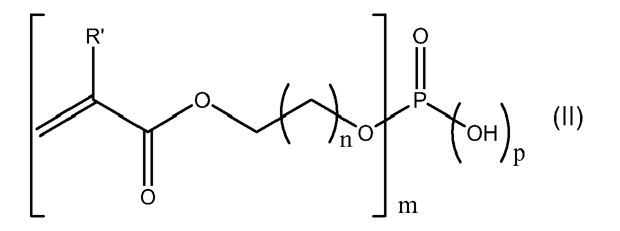

Dabei steht der Rest R' entweder für ein Wasserstoffatom oder für eine Methylgruppe. n steht für einen Wert von 1 bis 15, insbesondere von 1 bis 5, bevorzugt von 1 bis 3. m steht für einen Wert von 1 bis 3 steht und p für einen Wert von 3 minus m.

Bevorzugte Metall(meth)acrylate sind Metall(meth)acrylate von Calcium, Magnesium oder Zink, welche eine Hydroxylgruppe und/oder (Meth)-acrylsäure oder (Meth)acrylat als Ligand oder Anion aufweisen. Besonders bevorzugte Metall(meth)acrylate sind Zink-(Meth)acrylat, Calcium-(Meth)-acrylat, Zn(OH)(Meth)acrylat und Magnesium-(Meth)acrylat.

Bevorzugte (Meth)acrylate der Formel (II) sind 2-Methacryloyloxyethylphosphat, Bis(2-Methacryloyloxyethyl)phosphat sowie Tris(2-Methacryloyloxyethyl)phosphat und Mischungen davon.

Der Anteil des gegebenenfalls vorhandenen Haftverbesserers an der gesamten Zusammensetzung beträgt vorzugsweise zwischen 0.01 und 5 Gew.-%, insbesondere zwischen 0.5 und 4 Gew.-%.

Weiterhin kann die Zusammensetzung zusätzlich mindestens ein Core-Shell Polymer enthalten. Core-Shell Polymere bestehen aus einem elastischen Kernpolymer (Core) und einem starren Schalen-Polymer (Shell). Insbesondere geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.

Besonders geeignete Core-Shell-Polymere sind diejenigen, welche im Monomer **A** und/oder im Co-Monomer **B** aufquellen, sich aber darin nicht lösen.

Bevorzugte Core-Shell-Polymere sind so genannte MBS Polymere, welche beispielsweise kommerziell unter dem Handelsnamen Clearstrength® von Arkema Inc., USA, oder Paraloid® von Rohm and Haas, USA, erhältlich sind. Die Core-Shell Polymere werden bevorzugt in einer Menge von 0.01 bis 30 Gew.-%, insbesondere von 10 bis 20 Gew.-%, bezogen auf die gesamte Zusammensetzung, eingesetzt.

Weiterhin kann die Zusammensetzung zusätzlich mindestens einen Katalysator, insbesondere ein tertiäres Amin, ein Übergangmetallsalz oder ein Übergangsmetallkomplex enthalten. Beispielsweise sind solche geeigneten tertären Amine N,N-Dimethylanilin, N,N-Diethylanilin, N,N-Dimethyl-p-toluidin, N,N-Diethyl-p-toluidin, N-Methyl-N-hydroxyethyl-p-toluidin, N,N-*bis*(2-hydroxyethyl)-p-toluidin sowie alkoxylierte N,N-*bis*(hydroxyethyl)-*p*-toluidine, N-ethoxyliertes *p*-Toluidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Die Katalysatoren werden üblicherweise in einer Menge von 0.01 bis 2.5 Gew.-%, insbesondere von 0.1 bis 2 Gew.-%, bezogen auf die Zusammensetzung, eingesetzt.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 30 Gew.-%, insbesondere von 10 bis 30 Gew.-%, bevorzugt 15 bis 20 Gew.-%, bezogen auf die gesamte Zusammensetzung, eingesetzt.

Weiterhin kann die Zusammensetzung zusätzlich mindestens einen Radikalbildner enthalten. Als Radikalbildner sind insbesondere Moleküle geeignet, welche unter Einfluss von Wärme oder von elektromagnetischer Strahlung Radikale bilden, die dann zur Polymerisation der Zusammensetzung führen.

Als Radikalbildner gelten insbesondere thermisch aktivierbare Radikalbildner und Photoinitiatoren.

Als thermisch aktivierbare Radikalbildner sind insbesondere solche bevorzugt, welche bei Raumtemperatur noch genügend stabil sind, bei leicht erhöhter Temperatur aber bereits Radikale bilden. Insbesondere ist ein solcher Radikalbildner ein Peroxid, ein Perester oder ein Hydroperoxid. Bevorzugt werden organische Peroxide. Meist bevorzugt ist Dibenzoylperoxid.

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist.

Besonders bevorzugt ist der Photoinitiator ausgewählt aus der Gruppe bestehend aus α-Hydroxyketonen, Phenylglyoxylaten, Monoacylphosphinen, Diacylphosphinen, Phosphinoxiden und Mischungen davon, insbesondere 1-Hydroxy-cyclohexyl-phenyl-keton, Benzophenon, 2-Hydroxy-2-methyl-1-phenyl-propanon, Methyl-Phenyl-Glycoxylat, Oxy-phenyl-essigsäure 2-[2-oxo-2-phenyl-acetoxy-ethoxy]ethylester, Oxy-phenyl-essigsäure 2-[2-hydoxy-ethoxy]-ethyl ester, Diphenyl(2,4,6-trimethylbenzoyl)phosphinoxid, Phenylbis(2,4,6-trimethylbenzoyl)phosphinoxid und Mischungen davon. Derartige Photoinitiatoren sind beispielsweise kommerziell erhältlich aus der Produktlinie IRGACURE® und DAROCUR® von Ciba Speciality Chemicals, Schweiz.

Es können auch Mischungen von Photoinitiatoren verwendet werden.

Die Zusammensetzung kann gegebenenfalls zusätzlich noch weitere Bestandteile enthalten. Derartige zusätzliche Bestandteile sind Zähigkeitsmodifikatoren, Farbstoffe, Pigmente, Inhibitoren, UV- und Hitzestabilisatoren, Metalloxide, Antistatika, Flammschutzmittel, Biozide, Weichmacher, Wachse, Verlaufsmittel, Haftvermittler, Thixotropiermittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2,** bis zur Applikation getrennt voneinander aufbewahrt werden. Typischerweise beinhaltet eine erste Komponente **K1** insbesondere jene Inhaltsstoffe der beschriebenen Zusammensetzung, welche radikalisch polymerisierbare Gruppen aufweisen. Eine zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen, getrennt aufbewahrt werden.

Üblicherweise weisen in beschriebenen zweikomponentigen Zusammensetzungen die Komponente **K1** die Bestandteile Monomere, Elastomere, Core-Shell Polymere, Katalysatoren, Haftverbesserer, Pigmente und Füllstoffe und die Komponente **K2** die Bestandteile Radikalstarter, Pigmente und Füllstoffe auf. Das Mischverhältnis von **K1** zu **K2** liegt insbesondere im Bereich von 1:1 bis 10:1.

In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Ein weiterer Aspekt der Erfindung betrifft eine Packung, welche aus einer Verpackung und einem Packgut besteht.

Die Verpackung weist hierbei zwei von einander getrennte Kammern auf. Das Packgut ist eine zweikomponentige radikalisch aushärtende Zusammensetzung bestehend aus einer ersten Komponente **K1** und einer zweiten Komponente **K2,** wie sie soeben beschrieben wurden. Die Komponenten **K1** ist hierbei in der einen Kammer und die Komponente **K2** ist in der anderen Kammer der Verpackung vorhanden.

Die Verpackung bildet insbesondere eine Einheit, in der die zwei Kammern zusammengehalten oder direkt aneinander gebunden sind.

Die Abtrennung zwischen den Kammern kann beispielsweise eine Folie oder ein brechbare Schicht oder ein oder zwei Verschlüsse sein, welche eine Öffnung abdichten. In einer bevorzugten Ausführungsform stellt die Verpackung eine Doppelkartusche dar.

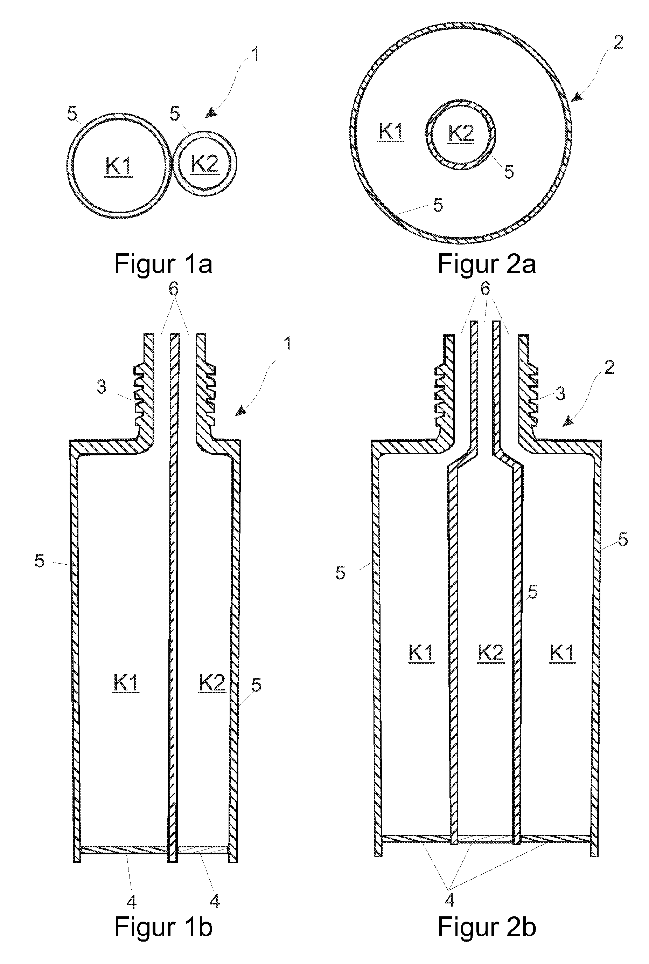

Figur 1 und Figur 2 zeigen schematische Darstellungen derartiger Doppelkartuschen, welche insbesondere als Zwillingskartusche 1 oder als Koaxialkartusche 2 ausgebildet sind im Querschnitt (Figur 1a und 2a) und im Längsschnitt (Figur 1b und 2b). Derartige Kartuschenverpackungen sind Stand der Technik für zweikomponentige Zusammensetzungen.

In der Zwillingskartusche 1 (Figur 1) sind zwei nebeneinander liegende, allenfalls durch Stege oder eine Verbindungsnaht oder eine Umhüllung, zum Beispiel durch eine Folie, in Längsrichtung miteinander verbundene, röhrenförmige Behälter mit starren Kammerwänden 5 vorhanden, welche auf der einen Seite mit einem verschiebbaren Kolben 4 verschlossen sind und auf der anderen Seite je eine abgeschlossene oder verschliessbare Öffnung 6 aufweisen, die typischerweise zusammen in einem Mündungsstück angeordnet sind. Dieses Mündungsstück weist ein Gewinde 3 auf, an welchem typischerweise ein Statikmischer (nicht gezeigt) aufgeschraubt werden kann.

Die Koaxialkartusche 2 (Figur 2) entspricht der Zwillingskartusche mit dem Unterschied, dass die röhrenförmigen Behälter nicht nebeneinander sondern ineinander angeordnet sind und sich somit eine Rohr-in-Rohr Anordnung ergibt.

Eine weitere Möglichkeit der Verpackung bildet ein Mehrkammerschlauchbeutel oder ein Mehrkammerschlauchbeutel mit Adapter, wie sie beispielsweise in WO 01/44074 A1 offenbart sind, und deren Inhalt somit als Gegenstand der vorliegenden Erfindung mit eingeschlossen wird.

Bevorzugt erfolgt das Mischen der beiden Komponenten **K1** und **K2** mit Hilfe eines Statikmischers, welcher auf die vorzugsweise für dieses Verfahren verwendete Verpackung mit zwei Kammern aufgesetzt werden kann.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Weiterhin umfasst die Erfindung die Verwendung einer Zusammensetzung, wie sie vorhergehend beschrieben ist, als Kleb- oder Dichtstoff oder zur Herstellung von Beschichtungen. Insbesondere umfasst die Erfindung die Verwendung der Zusammensetzung für die Verklebung von Materialien mit unterschiedlichen linearen Wärmeausdehnungskoeffizienten, bevorzugt für die Verklebung von Glas und keramischen Substraten mit Kunststoffen und/oder Metallen. In besonderem Masse geeignet ist die Zusammensetzung zur Verklebung von Materialien, deren lineare Wärmeausdehnungskoeffizienten in einem Verhältnis von ≥ 2 : 1 zu einander stehen. Insbesondere stehen die linearen Wärmeausdehnungskoeffizienten der zu verklebenden Substrate in einem Verhältnis von ≥ 3 : 1 zu einander, wenn die zu verklebenden Substrate Glas oder ein keramisches Substrat und ein Metall sind; und in einem Verhältnis von ≥ 8 : 1, wenn die zu verklebenden Substrate Glas oder ein keramisches Substrat und ein Kunststoff sind. Insbesondere stehen die linearen Wärmeausdehnungskoeffizienten in einem Verhältnis von ≤ 10'000 : 1, bevorzugt in einem Verhältnis von ≤ 100 : 1, zu einander.

Meist bevorzugt umfasst die Erfindung die Verwendung einer Zusammensetzung, wie sie vorhergehend beschrieben ist, als Kleb- oder Dichtstoff im Fensterbau, wo Glas mit Kunststoffen und/oder Metallen, insbesondere mit Polyvinylchlorid (PVC) und/oder mit Aluminium, verklebt wird.

Unter den Begriff Aluminium sind hierbei auch Legierungen von Aluminium, insbesondere mit Kupfer, Magnesium, Silizium, Mangan und/oder Zink, zu verstehen. Weiterhin kann das Aluminium vor der Applikation der Zusammensetzung einer Oberflächenbehandlung unterzogen werden. Typischerweise wird dabei nach der mechanischen (Schleifen, Bürsten, Strahlen, etc.) und/oder chemischen (Beizen, Ätzen, etc.) Entfernung der Oxidschicht des Aluminiums, das Aluminium kontrolliert zur Oxidation gebracht, beispielsweise durch die elektrolytische Oxidation von Aluminium (ELOXAL). Ein weiteres Verfahren zur Oberflächenbehandlung ist die so genannte Emailierung, bei der sonstige anorganische Schichten, vorwiegend aus Oxiden und Silikaten, auf das Aluminium aufgetragen werden.

Weiterhin bevorzugt ist die Verwendung einer erfindungsgemässen Zusammensetzung als Dichtstoff für Bördelfalzverklebungen.

Das Substrat, auf dessen Oberfläche die gemischte Zusammensetzung appliziert wird, kann im Vorfeld mit geeigneten Vorbehandlungsmitteln oder Reinigern behandelt worden sein. Besonders geeignet ist die Vorbehandlung bzw. die Reinigung der Substrate mit Sika®Cleaner P oder Sika® ADPrep, welche kommerziell erhältlich sind bei Sika Schweiz AG.

Die Vorbehandlung der Substrate mit Primern und/oder Haftvermittlern kann in bestimmten Fällen nützlich sein, jedoch haben sich erfindungsgemässe Zusammensetzungen als besonderes vorteilhaft erwiesen, weil sie auf zahlreichen Substraten, insbesondere auf Glas, PVC und Aluminium ohne Hafteinbussen primerlos appliziert werden können.

Weiterhin umfasst die Erfindung ein Verfahren der Verklebung von Substraten **S1** und **S2** umfassend die Schritte
i) Applizieren einer Zusammensetzung gemäss vorhergehender Beschreibung auf ein Substrat **S1;**
ii) Kontaktieren der applizierten Zusammensetzung mit einem zweiten Substrat **S2** innerhalb der Offenzeit;
   oder
i') Applizieren einer Zusammensetzung gemäss vorhergehender Beschreibung auf ein Substrat **S1;**
ii') Applizieren einer Zusammensetzung gemäss vorhergehender Beschreibung auf ein Substrat **S2;**
iii') Fügen der beiden mit Zusammensetzung applizierten Substrate **S1** und **S2** innerhalb der Offenzeit;
   wobei das zweite Substrat **S2** aus dem gleichen oder einem unterschiedlichen Material wie das Substrat **S1** besteht. Im Falle einer zweikomponentigen Zusammensetzung kann vor dem Schritt i), bzw. i') und ii'), ein Schritt I) des zumindest partiellen Mischens der zwei Komponenten erfolgen.

Weiterhin umfasst die Erfindung ein Verfahren des Abdichtens oder des Beschichtens eines Substrates **S1** umfassend die Schritte
i") Applizieren einer Zusammensetzung gemäss vorhergehender Beschreibung auf ein Substrat **S1;**
ii") Aushärtung der Zusammensetzung.

Im Falle einer zweikomponentigen Zusammensetzung kann vor dem Schritt i"), ein Schritt 1) des zumindest partiellen Mischens der zwei Komponenten erfolgen.

Weiterhin umfasst die vorliegende Erfindung eine gehärtete Zusammensetzung, welche aus einer vorhergehend beschriebenen Zusammensetzung durch einen Härtungsprozess erhalten wurde. In ausgehärteter Form zeichnet sich die Zusammensetzung dadurch aus, dass sie kein visko-elastisches Verhalten aufzeigt und dass es somit unter Druckbelastung zu keiner, bzw. zu fast keiner, plastischen Verformung der Zusammensetzung kommt.

Ebenfalls umfasst die Erfindung Artikel, welche nach einem vorhergehend beschriebenen Verfahren verklebt oder abgedichtet wurden. Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, ein Werkzeug oder ein Transportmittel, insbesondere ein Fahrzeug zu Wasser oder zu Lande, bevorzugt ein Automobil, ein Bus, ein Lastkraftwagen, ein Zug oder ein Schiff. Bevorzugt sind solche Artikel auch Anbauteile von industriellen Gütern oder Transportmittel, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Fenster und Türen, wie sie in Bauwerken eingesetzt werden.

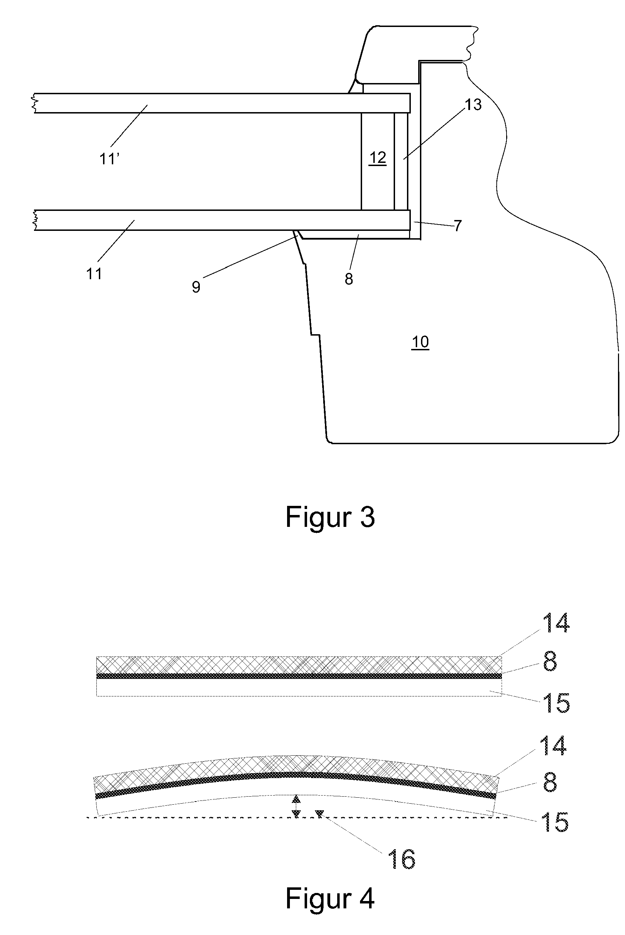

Figur 3 zeigt eine schematische Darstellung eines verklebten Fensters oder einer verklebten Türe im Teilquerschnitt. Dabei ist der Rahmen 10, welcher aus Kunststoff oder aus einem Metall, insbesondere aus PVC oder aus Aluminium, besteht und eine Dichtungslippe 9 aufweisen kann, mit einer Isolierglasscheibe verklebt. Isolierglasscheiben bestehen typischerweise aus einer inneren Fensterscheibe 11 und einer äusseren Fensterscheibe 11' mit dazwischen gelegenem Abstandhalter 12 und Isolierglasabdichtung 13. Der Klebstoff 8 wird dabei insbesondere zwischen der inneren Fensterscheibe 11 und dem Rahmen 10 angebracht. Je nach Ausführungsform des verklebten Artikels wird die Stirnseite der Isolierglasscheibe 7 ebenfalls mit dem Rahmen 10 verklebt. In diesem Fall befindet sich Klebstoff zwischen dem Rahmen 10 und der Stirnseite der Isolierglasscheibe 7.

### Beispiele

### Herstellung eines Elastomers

Das Elastomer **C1** wurde wie folgt hergestellt:

849 g Polyoxypropylen-Diol (Acclaim® 4200 N, Bayer MaterialScience; OH-Zahl 28.5 KOH/g) und 101 g 1-lsocyanato-3,3,5-trimethyl-5-isocyanatomethyl-cyclohexan (= lsophorondiisocyanat oder IPDI; Desmodur I, Bayer MaterialScience) wurden bei 60 °C zu einem Isocyanatgruppen terminierten Polyurethanpolymer mit einem titrimetrisch bestimmten Gehalt an freien Isocyanatgruppen von 1.88 Gew.-% umgesetzt. Anschliessend wurden 10 g Hydroxyethylacrylat zugegeben, welches mit den freien Isocyanatgruppen zum Elastomer **C1** der Formel (I) reagiert.

### Herstellung der Zusammensetzungen

Es wurden die folgenden Zusammensetzungen hergestellt:

Als Komponente **K1** wurden die in den Tabellen 1 bis 3 aufgeführten Bestandteile in den angegebenen Mengen in einem Dissolver bei einer Temperatur von maximal 80 °C miteinander vermischt und eingerührt, bis eine makroskopisch homogene Paste erhalten wurde.

Als Komponente **K2** wurden 50 Gew.-% Dibenzoylperoxid (20 %-ig) in Weichmacher, 47 Gew.-% Kreide, 2.5 Gew.-% Thixotropiermittel und 0.5 Gew.-% eines Pigments in einem Dissolver miteinander vermischt.

Die hergestellten Komponenten **K1** und **K2** wurden in die getrennten Kammern von Koaxialkartuschen eingefüllt und bei der Anwendung in einem Volumenverhältnis **K1 : K2** von 10 : 1 eingesetzt.

### Beschreibung der Prüfmethoden

Die **Zugfestigkeit** (Tensile Strength, "TS"), die **Bruchdehnung** (Elongation at Break, "Elong.") und das **Elastizitätsmodul** ("E-mod") wurden bestimmt nach DIN EN 53504 (Zuggeschwindigkeit: 200 mm/min) an Filmen mit einer Schichtdicke von 2 mm, welche während 7 Tagen im Normklima (23±1 °C, 50±5% relative Luftfeuchtigkeit) aushärteten.

Das Elastizitätsmodul ist im Bereich von 0.5 bis 8 % Dehnung angegeben.

Die **Zugscherfestigkeit** (Tensile Shear Strength, "TSS") wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 12x25 mm; Schichtdicke: 1.5 mm; Messgeschwindigkeit: 10 mm/min; Substrate: Floatglas, PVC und Aluminium; Temperatur: 23°C (falls nicht anders genannt)).

Es wurden folgende Substrate verwendet, welche vor der Applikation der Zusammensetzung mit Sika®ADPrep, erhältlich bei Sika Schweiz AG, vorbehandelt wurden:
■ Glasprüfkörper (75x20x6 mm) von Rocholl, Deutschland (Floatglas, Zinkseite nicht markiert);
■ PVC Prüfkörper (1 00x25x4 mm) von Rocholl, Deutschland (hart-PVC);
■ Aluminium Prüfkörper (100x25x2 mm) von Rocholl, Deutschland (AIMg₃-Legierung).

Zur Bestimmung der **Durchbiegung** wurden wie in Figur 4 (oben) gezeigt PVC-Lamellen 15 bei einer Temperatur von 23 °C mit Glasscheiben 14 in der Längsrichtung verklebt. Der Klebstoff 8 wurde dabei in einer Schichtdicke von 5 mm auf die PVC-Lamelle zwischen zwei Schaumstoffklebeband-Bahnen, die als Abstandhalter angebracht wurden, appliziert. Nachdem der Klebstoff während 24 Stunden im Normklima aushärtete, wurde der hergestellte Schichtkörper für 12 Stunden einer Temperatur von -20 °C ausgesetzt und ist in Figur 4 (unten) gezeigt. Die maximale Durchbiegung wurde in der Mitte des Schichtkörpers, das heisst im Bereich von 50 cm +/- 2 cm von einem Ende des Schichtkörpers her, an der Stelle mit maximaler Durchbiegung 16 gemessen.

Für die Bestimmung der Durchbiegung wurden folgende Substrate verwendet, welche vor der Applikation der Zusammensetzung mit Sika®ADPrep, erhältlich bei Sika Schweiz AG, vorbehandelt wurden:
■ Glasprüfkörper (1000x50x6 mm) von Rocholl, Deutschland (Floatglas, Zinkseite nicht markiert);
■ PVC Prüfkörper (1000x50x20 mm) von Angst+Pfister AG, Schweiz (hart-PVC);

**Tabelle 1 Elastische (Meth)acrylatzusammensetzungenb B1 bis B13 und Referenzbeispiele R1 und R2 sowie die Resultate.**

| | | ***B1*** | ***B2*** | ***B3*** | ***B4*** | ***B5*** | ***B6*** | ***B7*** | ***B8*** | ***B9*** | ***B10*** | ***B11*** | ***B12*** | ***B13*** | ***R1*** | ***R2*** |
|---|---|---|---|---|---|---|---|---|---|---|---|---|---|---|---|---|
| **Formulierung** | | | | | | | | | | | | | | | | |
| MMA* | **A** | 30 | | | | | | | | | | | | | 20 | |
| THFMA* | **A** | | 47 | 47 | | | | | | | | | | | | 47 |
| IBMA* | **A** | | | | 30 | 30 | | | | | | | | | | |
| CHMA* | **A** | | | | | | 40 | 40 | 30 | 30 | | | | | | |
| TMCHMA* | **A** | | | | | | | | | | 40 | 30 | 40 | 30 | | |
| EHA* | **B** | 6 | 4 | | 4 | | 4 | | 4 | | 4 | 4 | | | | |
| MADAE* | **B** | | | 4 | | 4 | | 4 | | 4 | | | 4 | 4 | | |
| C1* | **C** | 30 | | | 30 | 30 | 20 | 20 | 30 | 30 | 20 | 30 | 20 | 30 | 40 | 15 |
| Hycar*^{,a} | **C** | | 15 | 15 | | | | | | | | | | | | |
| Haftverbesserer* | | | | | 2 | 2 | 2 | 2 | 2 | 2 | 2 | 2 | 2 | 2 | | |
| Katalysator*^{,b} | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Core-Shell Polymer* | | 16 | 16 | 16 | 16 | 16 | 16 | 16 | 16 | 16 | 16 | 16 | 16 | 16 | 16 | 16 |
| Haftvermittler*^{,c} | | 2 | 2 | 2 | 2 | 2 | 2 | 2 | 2 | 2 | 2 | 2 | 2 | 2 | 2 | 2 |
| Kreide* | | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| **A:(B+C)** | | **0.831** | **2.47** | **2.47** | **0.88** | **0.88** | **1.67** | **1.67** | **0.88** | **0.88** | **1.67** | **0.88** | **1.67** | **0.88** | **0.50** | 3.13 |
| **Resultate** | | | | | | | | | | | | | | | | |
| TS [MPa] | | **7.3** | **5.2** | **4.4** | **5** | **3.9** | **4.6** | **4.3** | **3.2** | **3.1** | **5.3** | **5.1** | **7.5** | **6.6** | **3.6** | 7.1 |
| Elong. [%] | | **250** | **266** | **200** | **309** | **280** | **217** | **221** | **223** | **233** | **195** | **255** | **164** | **235** | **172** | **221** |
| E-mod 0.5-8% [MPa] | | **14.0** | **12.0** | **5.7** | **12.6** | **13.2** | **52.5** | **48.8** | **7.7** | **5.9** | **35.8** | **16.9** | **47.8** | **17.7** | **7.7** | **49.0** |
| TSS Glas [MPa] | | **4.2** | **4.6** | **3.4** | **5.2** | **5.1** | **8.1** | **7.9** | **6.3** | **7.1** | **6.5** | **5.9** | **6.1** | **5.3** | **3.1** | **5.8** |
| TSS PVC [MPa] | | **4** | **5.8** | **4.5** | **2** | **2** | **5** | **3.2** | **4.1** | **3** | **2.1** | **2** | **2** | **2.1** | **1.7** | **8.5** |
| TSS AIMg₃ [MPa] | | | **5.5** | **4.4** | | | | | | | | | | | | |
| Durchbiegung [mm] | | **4.5** | **8** | **7.8** | **4.4** | **4.3** | **4.4** | **4.6** | **4.3** | **4.4** | | **4.7** | | **4.5** | | **11.5** |

| | | | | | | | | | | | | | | | | |
|---|---|---|---|---|---|---|---|---|---|---|---|---|---|---|---|---|
| * Angaben in Gewichtsteilen ^{a} Hycar VTBNX 1300x33 von der Firma Noveon Inc., USA ^{b} tertiäres Amin ^{c} 3-Glycidyloxypropyltrimethoxysilan | | | | | | | | | | | | | | | | |

Aus Tabelle 1 ist ersichtlich, dass die erfindungsgemässen Zusammensetzungen, welche ein Monomer **A**, ein Co-Monomer **B** und ein Elastomer **C** enthalten, gegenüber dem Referenzbeispiel ***R1*** bessere Eigenschaften in der Zugfestigkeit und in der Haftung und gegenüber ***R2*** eine deutlich geringere Durchbiegung aufweisen. ***R1*** und ***R2*** enthalten kein Co-Monomer ***B*.**

**Tabelle 2 Elastische (Meth)acrylatzusammensetzungen B2, B4, B6, B8 und Referenzbeispiele R3, R4, R7, R8, welche Laurylacrylat an Stelle des Co-Monomers B enthalten und Resultate.**

| | | ***B2*** | ***R3*** | ***B4*** | ***R4*** | ***B6*** | ***R7*** | ***B8*** | ***R8*** |
|---|---|---|---|---|---|---|---|---|---|
| **Formulierung** | | | | | | | | | |
| THFMA* | **A** | 47 | 47 | | | | | | |
| IBMA* | **A** | | | 30 | 30 | | | | |
| CHMA* | **A** | | | | | 40 | 40 | 30 | 30 |
| EHA* | **B** | 4 | | 4 | | 4 | | 4 | |
| Laurylacrylat* | | | 4 | | 4 | | 4 | | 4 |
| C1* | **C** | | | 30 | 30 | 20 | 20 | 30 | 30 |
| Hycar*^{,a} | **C** | 15 | 15 | | | | | | |
| Haftverbesserer* | | | | 2 | 2 | 2 | 2 | 2 | 2 |
| Katalysator*^{,b} | | 1.5 | 1.5 | 1.5 | 1.5 | 1.5 | 1.5 | 1.5 | 1.5 |
| Core-Shell Polymer* | | 16 | 16 | 16 | 16 | 16 | 16 | 16 | 16 |
| Haftvermittler*^{,c} | | 2 | 2 | 2 | 2 | 2 | 2 | 2 | 2 |
| Kreide* | | 17.5 | 17.5 | 17.5 | 17.5 | 17.5 | 17.5 | 17.5 | 17.5 |
| **A:(B+C)** | | **2.47** | | **0.88** | | **1.67** | | **0.88** | |
| **Resultate** | | | | | | | | | |
| TS [MPa] | | **5.2** | **4.4** | **5** | **3.1** | **4.6** | **3.5** | **3.2** | **2.1** |
| Elong. [%] | | **266** | **230** | **309** | **205** | **217** | **258** | **223** | **304** |
| E-mod 0.5-8% [MPa] | | **12.0** | **35.0** | **12.6** | **13.0** | **52.5** | **15.8** | **7.7** | **3.0** |
| TSS Glas [MPa] | | **4.6** | **1.8** | **5.2** | **5** | **8.1** | **4.2** | **6.3** | **4** |
| TSS PVC [MPa] | | **5.8** | **2.4** | **2** | **1.6** | **5** | **2** | **4.1** | **1** |
| TSS AIMg₃ [MPa] | | **5.5** | **2.2** | | | | | | |
| Durchbiegung [mm] | | **8** | | **4.4** | **4.4** | **4.4** | | **4.3** | |

| | | | | | | | | | |
|---|---|---|---|---|---|---|---|---|---|
| * Angaben in Gewichtsteilen. ^{a} Hycar VTBNX 1300x33 von der Firma Noveon Inc., USA ^{b} tertiäres Amin ^{c} 3-Glycidyloxypropyltrimethoxysilan | | | | | | | | | |

Aus Tabelle 2 ist ersichtlich, dass die erfindungsgemässen Beispiele, welche ein Co-Monomer **B** enthalten, deutlich bessere Eigenschaften in der Zugfestigkeit und/oder in der Haftung aufweisen als die entsprechenden Referenzbeispiele, welche ein von Co-Monomer **B** verschiedenes monofunktionelles (Meth)acrylat-Co-Monomer, wie es in WO02/070619 offenbart ist, aufweisen.

**Tabelle 3 Elastische (Meth)acrylatzusammensetzungen B5, B6, B8, B10, B11 und Referenzbeispiele R5, R9, R10, R12, deren Verhältnis von A:(B+C) ausserhalb des erfindungsgemässen Bereichs liegen und Resultate.**

| | | ***B5*** | ***R5*** | ***B6*** | ***B8*** | ***R9*** | ***R10*** | ***B10*** | ***B11*** | ***R12*** |
|---|---|---|---|---|---|---|---|---|---|---|
| **Formulierung** | | | | | | | | | | |
| IBMA* | **A** | 30 | 20 | | | | | | | |
| CHMA* | **A** | | | 40 | 30 | 49.5 | 20 | | | |
| TMCHMA* | **A** | | | | | | | 40 | 30 | 20 |
| EHA* | **B** | | 4 | 4 | 4 | 4 | 4 | 4 | 4 | 4 |
| MADAE* | **B** | 4 | | | | | | | | |
| C1* | **C** | 30 | 40 | 20 | 30 | 12.5 | 40 | 20 | 30 | 40 |
| Haftverbesserer* | | 2 | 2 | 2 | 2 | 2 | 2 | 2 | 2 | 2 |
| Katalysator*^{,b} | | 1.5 | 1.5 | 1.5 | 1.5 | 1.5 | 1.5 | 1.5 | 1.5 | 1.5 |
| Core-Shell Polymer* | | 16 | 16 | 16 | 16 | 16 | 16 | 16 | 16 | 16 |
| Haftvermittler*^{,c} | | 2 | 2 | 2 | 2 | 2 | 2 | 2 | 2 | 2 |
| Kreide* | | 17.5 | 17.5 | 17.5 | 17.5 | 17.5 | 17.5 | 17.5 | 17.5 | 17.5 |
| **A:(B+C)** | | **0.88** | **0.45** | **1.67** | **0.88** | **3.00** | **0.45** | **1.67** | **0.88** | **0.45** |
| **Resultate** | | | | | | | | | | |
| TS [MPa] | | **3.9** | **3.2** | **4.56** | **3.18** | **7.2** | **2.9** | **5.3** | **5.1** | **2.4** |
| Elong. [%] | | **280** | **302** | **217** | **223** | **174** | **225** | **195** | **255** | **306** |
| E-mod 0.5-8% [MPa] | | **13.2** | **10.3** | **52.5** | **7.7** | **66.6** | **7.4** | **35.8** | **16.9** | **8.5** |
| | | | | | | | | | | |
| TSS Glas [MPa] | | **5.1** | **4.1** | **8.1** | **6.21** | **7.3** | **3.2** | **6.5** | **5.9** | **4.3** |
| TSS PVC [MPa] | | **2** | **1** | **4.97** | **4.07** | **3.2** | **1.5** | **2.1** | **2** | **0.8** |
| Durchbiegung [mm] | | **4.3** | | **4.45** | **8** | | | | **4.7** | |

| | | | | | | | | | | |
|---|---|---|---|---|---|---|---|---|---|---|
| * Angaben in Gewichtsteilen. ^{b} tertiäres Amin ^{c} 3-Glycidyloxypropyltrimethoxysilan | | | | | | | | | | |

Aus Tabelle 3 ist ersichtlich, dass die erfindungsgemässen Beispiele, welche das beanspruche Verhältnis **A:(B+C)** aufweisen, gegenüber den entsprechenden Referenzbeispielen mit abweichendem Verhältnis **A:(B+C)** bessere Eigenschaften in der Zugfestigkeit und in der Haftung zeigen.

### Bezugszeichenliste

- 1: Zwillingskartusche
- 2: Koaxialkartusche
- 3: Gewinde
- 4: verschiebbarer Kolben
- 5: Kammerwand
- 6: Öffnung
- 7: Stirnseite der Isolierglasscheibe
- 8: Kleb- oder Dichtstoff
- 9: Dichtungslippe
- 10: Rahmen
- 11: Innere Fensterscheibe
- 11': Äussere Fensterscheibe
- 12: Abstandhalter
- 13: Isolierglasabdichtung
- 14: Glasscheibe
- 15: PVC-Lamelle
- 16: Stelle mit maximaler Durchbiegung

Figur 1 zeigt schematisch eine Zwillingskartusche (1) im Querschnitt (Figur 1a) und im Längsschnitt (Figur 1 b).
Figur 2 zeigt schematisch eine Koaxialkartusche (2) im Querschnitt (Figur 2a) und im Längsschnitt (Figur 2b).
Figur 3 zeigt schematisch einen Teilquerschnitt durch ein Fenster oder eine Türe.
Figur 4 zeigt schematisch eine Glasscheibe (14), welche mit einer PVC-Lamelle (15) verklebt ist und die Stelle mit einer maximalen Durchbiegung (16).

In den Figuren sind nur die für das unmittelbare Verständnis der Erfindung wesentlichen Elemente gezeigt. Gleiche oder gleich wirkende Elemente sind in den verschiedenen Figuren mit den gleichen Bezugszeichen versehen. Selbstverständlich ist die Erfindung nicht auf gezeigte und beschriebene Ausführungsbeispiele beschränkt.

## Patentansprüche

1. Zusammensetzung umfassend
a) mindestens ein Monomer **A**, welches ausgewählt ist aus der Gruppe bestehend aus Methylmethacrylat (MMA), Tetrahydrofurfurylmethacrylat (THFMA), Cyclohexylmethacrylat (CHMA), Isobornylmethacrylat (IBMA), Trimethylcyclohexylmethacrylat (TMCHMA), insbesondere Methylmethacrylat (MMA) und Tetrahydrofurfurylmethacrylat (THFMA);
b) > 0 bis 10 Gew.-% eines Co-Monomers **B**, welches Ethylhexylacrylat (EHA) oder Maleinsäurediallylester (MADAE) ist;
c) mindestens ein Elastomer **C** der Formel (1), 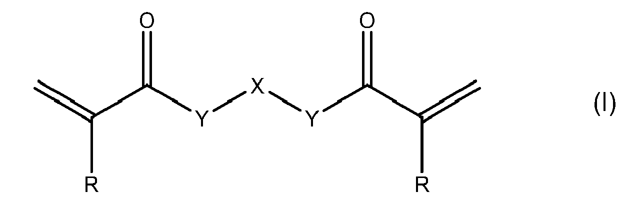
wobei R entweder für ein Wasserstoffatom oder für eine Methylgruppe steht;
X für ein polymeres Polyol nach Entfernung von zwei OH-Gruppen steht;
und Y für O oder NR" steht, wobei R" für einen Kohlenwasserstoffrest oder für ein Wasserstoffatom, bevorzugt für ein Wasserstoffatom, steht;
wobei der Anteil der Verbindungen **A, B** und **C** zusammen ≥ 50 Gew.-% an der gesamten Zusammensetzung beträgt;
und das Gewichtsverhältnis **A:(B+C)** in der Zusammensetzung zwischen
■ 0.5:1 und 1.2:1 liegt, wenn **A** MMA ist;
■ 0.6:1 und 3.2:1 liegt, wenn **A** THFMA ist;
■ 0.5:1 und 2:1 liegt, wenn **A** CHMA ist;
■ 0.5:1 und 1.5:1 liegt, wenn **A** IBMA ist;
■ 0.5:1 und 2:1 liegt, wenn **A** TMCHMA ist.

2. Zusammensetzung gemäss Anspruch 1, **dadurch gekennzeichnet, dass** das Gewichtsverhältnis **A:(B+C)** in der Zusammensetzung zwischen
■ 0.6:1 und 1.1:1, bevorzugt zwischen 0.8:1 und 1:1, liegt wenn **A** MMA ist;
■ 1:1 und 2.6:1, bevorzugt zwischen 1.5:1 und 2:1, liegt wenn **A** THFMA ist;
■ 0.5:1 und 1.7:1, bevorzugt zwischen 0.5:1 und 1.5:1, liegt wenn **A** CHMA ist;
■ 0.5:1 und 1.3:1, bevorzugt zwischen 0.5:1 und 1:1, liegt wenn **A** IBMA ist;
■ 0.5:1 und 1.5:1, bevorzugt zwischen 0.5:1 und 1:1, liegt wenn **A** TMCHMA ist.

3. Zusammensetzung gemäss einem der vorhergehenden Ansprüche, **dadurch gekennzeichnet, dass** das Elastomer **C** der Formel (I) ein mittleres Molekulargewicht von 1'000 bis 40'000 g/mol, insbesondere von 1'000 bis 30'000 g/mol, bevorzugt von 1'000 bis 20'000 g/mol, aufweist.

4. Zusammensetzung gemäss einem der vorhergehenden Ansprüche, **dadurch gekennzeichnet, dass** das polymere Polyol
ein Polyalkylenpolyol, ein Polyoxyalkylenpolyol oder ein Polyurethanpolyol;
ein polyhydroxyfunktionelles Ethylen-Propylen-, Ethylen-Butylen- oder Ethylen-Propylen-Dien-Copolymer;
ein polyhydroxyfunktionelles Copolymer aus Dienen wie 1,3-Butandien oder Diengemischen und Vinylmonomeren wie Styrol, Acrylnitril oder Isobutylen;
ein polyhydroxyfunktionelles Polybutadienpolyol;
ein polyhydroxyfunktionelles Acrylonitril/Butadien-Copolymer;
oder ein Polysiloxanpolyol, ist.

5. Zusammensetzung gemäss Anspruch 4, **dadurch gekennzeichnet, dass** das polymere Polyol ein polymeres Diol **PD** ist.

6. Zusammensetzung gemäss einem der vorhergehenden Ansprüche, **dadurch gekennzeichnet, dass** das Elastomer **C** ein Polyurethan(meth)-acrylat ist, insbesondere herstellbar aus der Reaktion von mindestens einem Diol **D** mit mindestens einem Diisocyanat und einer (Meth)acrylsäure oder einem (Meth)acrylamid oder einem (Meth)-acrylsäureester, welcher eine Hydroxylgruppe aufweist, wobei
- das Diol **D** mit einem Diisocyanat, welches in stöchiometrischen Überschuss vorliegt, reagiert;
- und das resultierende Isocyanatgruppen terminierte Polyurethan mit einer (Meth)acrylsäure oder mit einem (Meth)acrylamid oder mit einem (Meth)acrylsäureester, welcher eine Hydroxylgruppe aufweist, insbesondere mit einem Hydroxyalkyl(meth)acrylat, bevorzugt mit Hydroxyethylacrylat (HEA) oder Hydroxyethylmethacrylat (HEMA), oder mit einem Monohydroxypoly(meth)acrylat eines Polyols, bevorzugt von Glycerin oder Trimethylolpropan, zum Elastomer **C** der Formel (I) umgesetzt wird.

7. Zusammensetzung gemäss einem der Ansprüche 1 bis 5, **dadurch gekennzeichnet, dass** das Elastomer **C** ein Polyurethan(meth)acrylat ist, insbesondere herstellbar aus der Reaktion von mindestens einem Diol **D** mit mindestens einem Diisocyanat und einer (Meth)acrylsäure oder einem (Meth)acrylamid oder einem (Meth)acrylsäureester, welcher eine Hydroxylgruppe aufweist, wobei
- das Diisocyanat, welches in stöchiometrischen Überschuss vorliegt, mit einer (Meth)acrylsäure oder mit einem (Meth)acrylamid oder mit einem (Meth)acrylsäureester, welcher eine Hydroxylgruppe aufweist, insbesondere mit einem Hydroxyalkyl-(meth)acrylat, bevorzugt mit Hydroxyethylacrylat (HEA) oder Hydroxyethylmethacrylat (HEMA), oder mit einem Monohydroxy-poly(meth)acrylat eines Polyols, bevorzugt von Glycerin oder Trimethylolpropan, reagiert;
- und das resultierende, eine Isocyanatgruppe aufweisende Zwischenprodukt mit einem Diol **D** zum Elastomer **C** der Formel (I) umgesetzt wird.

8. Zusammensetzung gemäss einem der vorhergehenden Ansprüche,
**dadurch gekennzeichnet, dass**
das reaktive Monomer **A** Tetrahydrofurfurylmethacrylat (THFMA) ist; das Co-Monomer **B** Ethylhexylacrylat (EHA) oder Maleinsäurediallylester (MADAE) ist;
und das Elastomer **C** Polyurethan(meth)acrylat ist.

9. Zusammensetzung gemäss einem der vorhergehenden Ansprüche, **dadurch gekennzeichnet, dass** die Zusammensetzung zusätzlich einen Haftverbesserer, insbesondere ein Metall(meth)acrylat, bevorzugt ein Metall(meth)acrylat von Calcium, Magnesium oder Zink, welches eine Hydroxylgruppe und/oder (Meth)acrylsäure oder (Meth)acrylat als Ligand oder Anion aufweist;
oder ein (Meth)acrylat der Formel (II) enthält, 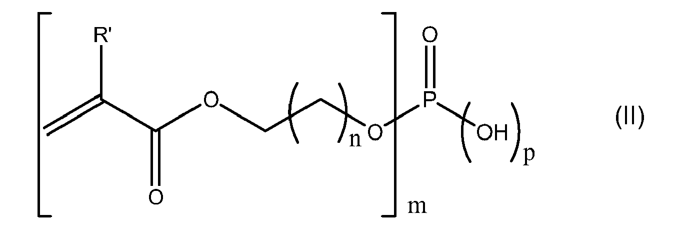 wobei R' entweder für ein Wasserstoffatom oder für eine Methylgruppe steht;
n für einen Wert von 1 bis 15, insbesondere von 1 bis 5, bevorzugt von 1 bis 3, steht;
m für einen Wert von 1 bis 3 steht;
und p für einen Wert von 3 minus m steht;
insbesondere 2-Methacryloyloxyethylphosphat, Bis(2-Methacryloyloxyethyl)phosphat und Tris(2-Methacryloyloxyethyl)phosphat sowie Mischungen davon.

10. Zusammensetzung gemäss einem der vorhergehenden Ansprüche, **dadurch gekennzeichnet, dass** die Zusammensetzung zusätzlich mindestens ein Core-Shell Polymer enthält.

11. Zusammensetzung gemäss einem der vorhergehenden Ansprüche, **dadurch gekennzeichnet, dass** die Zusammensetzung zusätzlich mindestens einen Katalysator, insbesondere ein tertiäres Amin, ein Übergangmetallsalz oder ein Übergangsmetallkomplex, enthält.

12. Zusammensetzung gemäss einem der vorhergehenden Ansprüche, **dadurch gekennzeichnet, dass** die Zusammensetzung mindestens einen Füllstoff enthält.

13. Zusammensetzung gemäss Anspruch 12, **dadurch gekennzeichnet, dass** der Füllstoff insbesondere Calciumcarbonat, bevorzugt beschichtetes Calciumcarbonat, ist und dass der Anteil des Füllstoffs an der gesamten Zusammensetzung 0.01 bis 30 Gew.-%, insbesondere 10 bis 30 Gew.-%, bevorzugt 15 bis 20 Gew.-%, beträgt.

14. Zusammensetzung gemäss einem der vorhergehenden Ansprüche, **dadurch gekennzeichnet, dass** die Zusammensetzung zusätzlich mindestens einen Radikalbildner,
insbesondere einen thermisch aktivierbaren Radikalbildner, bevorzugt ein Peroxid, ein Hydroperoxid oder einen Perester, meist bevorzugt Dibenzoylperoxid,
oder einen Photoinitiator, insbesondere einen Photoinitiator, welcher bei einer Bestrahlung mit einer elektromagnetischen Strahlung der Wellenlänge von 230 nm bis 400 nm Radikale bildet, enthält.

15. Zusammensetzung gemäss einem der vorhergehenden Ansprüche, **dadurch gekennzeichnet, dass** die Zusammensetzung zweikomponentig ist, wobei
die erste Komponente **K1** mindestens jene Inhaltsstoffe der Zusammensetzung enthält, welche radikalisch polymerisierbare Gruppen aufweisen;
und die zweite Komponente **K2** mindestens einen Radikalbildner enthält.

16. Packung bestehend aus einer Verpackung mit zwei von einander getrennten Kammern und einem Packgut, welches eine zweikomponentige Zusammensetzung gemäss Anspruch 15 darstellt, wobei in der einen Kammer die Komponente **K1** und der anderen Kammer die Komponente **K2** vorhanden ist.

17. Verwendung einer Zusammensetzung gemäss einem der Ansprüche 1 bis 15 als Kleb- oder Dichtstoff oder zur Herstellung von Beschichtungen.

18. Verwendung gemäss Anspruch 17 für die Verklebung von Materialien mit unterschiedlichen linearen Wärmeausdehnungskoeffizienten, insbesondere für die Verklebung von Glas oder keramischen Substraten mit Kunststoffen und/oder Metallen, bevorzugt für die Verklebung von Glas mit Polyvinylchlorid (PVC) und/oder Aluminium.

19. Verwendung gemäss Anspruch 18, **dadurch gekennzeichnet, dass** die linearen Wärmeausdehnungskoeffizienten der zu verklebenden Substrate in einem Verhältnis von ≥ 2 : 1 zu einander stehen.

20. Verwendung gemäss einem der Ansprüche 17 bis 19, **dadurch gekennzeichnet, dass** die linearen Wärmeausdehnungskoeffizienten der zu verklebenden Substrate in einem Verhältnis von ≥ 3 : 1 zu einander stehen, wenn die zu verklebenden Substrate Glas oder ein keramisches Substrat und ein Metall sind;
und in einem Verhältnis von ≥ 8 : 1, wenn die zu verklebenden Substrate Glas oder ein keramisches Substrat und ein Kunststoff sind.

21. Verfahren der Verklebung von Substraten **S1** und **S2** umfassend die Schritte
i) Applizieren einer Zusammensetzung gemäss einem der Ansprüche 1 bis 15 auf ein Substrat **S1;**
ii) Kontaktieren der applizierten Zusammensetzung mit einem zweiten Substrat **S2** innerhalb der Offenzeit;
oder
i') Applizieren einer Zusammensetzung gemäss einem der Ansprüche 1 bis 15 auf ein Substrat **S1;**
ii') Applizieren einer Zusammensetzung gemäss einem der Ansprüche 1 bis 15 auf ein Substrat **S2;**
iii') Fügen der beiden mit Zusammensetzung applizierten Substrate **S1** und **S2** innerhalb der Offenzeit;
wobei das zweite Substrat **S2** aus dem gleichen oder einem unterschiedlichen Material wie das Substrat **S1** besteht; und wobei vor dem Schritt i), bzw. i') und ii'), im Falle einer zweikomponentigen Zusammensetzung, ein Schritt I) des partiellen Mischens der zwei Komponenten erfolgt.

22. Verfahren des Abdichtens oder des Beschichtens eines Substrates **S1** umfassend die Schritte
i") Applizieren einer Zusammensetzung gemäss einem der Ansprüche 1 bis 15 auf ein Substrat **S1;**
ii") Aushärtung der Zusammensetzung;
wobei vor dem Schritt i"), im Falle einer zweikomponentigen Zusammensetzung, ein Schritt I) des partiellen Mischens der zwei Komponenten erfolgt.

23. Gehärtete Zusammensetzung, **dadurch gekennzeichnet, dass** sie aus einer Zusammensetzung gemäss einem der Ansprüche 1 bis 15 durch einen Härtungsprozess erhalten wird.

24. Artikel, welcher nach einem Verfahren gemäss einem der Ansprüche 21 und 22 verklebt, abgedichtet oder beschichtet wurde.

25. Artikel gemäss Anspruch 24, **dadurch gekennzeichnet, dass** es sich bei diesem Artikel um ein Gebäude oder ein Bauwerk des Hoch- oder Tiefbaus, ein industriell gefertigtes Gut oder ein Konsumgut, insbesondere ein Fenster, eine Haushaltsmaschine, ein Werkzeug oder ein Transportmittel, insbesondere ein Fahrzeug, oder ein Anbauteil eines Fahrzeugs, bevorzugt ein Fenster oder eine Türe, wie sie in Bauwerken eingesetzt werden, handelt.
